## Europäisches Patentamt
## European Patent Office
## Office européen des brevets

(11) Publication number: **0 062 014**
A1

(12) # EUROPEAN PATENT APPLICATION

(21) Application number: **82850029.8**

(22) Date of filing: **18.02.82**

(51) Int. Cl.³: **F 16 T 1/22**

(30) Priority: **26.03.81 SE 8101943**

(43) Date of publication of application:
**06.10.82 Bulletin 82/40**

(84) Designated Contracting States:
**AT BE DE FR GB IT NL**

(71) Applicant: **Atlas Copco Aktiebolag**

**Nacka(SE)**

(72) Inventor: **Sienack, Desideratus Julius**
**Zinkval 76**
**B-2630 Aartselaar(BE)**

(74) Representative: **Grundfelt, Gunnar et al,**
**c/o Atlas Copco Aktiebolag Patent Department**
**S-105 23 Stockholm(SE)**

(54) **A drain valve assembly.**

(57) A drain valve assembly for a compressed gas system comprises a container (1) in which a float-operated (4) valve is mounted. The valve member (2) is made of a flexible dirt repellant plastic material having good corrosion resistance. The valve member normally covers a flow communication (7) provided in a valve seat (5) of a similar material.

Fig. 1

EP 0 062 014 A1

A drain valve assembly

The present invention relates to a drain valve assembly for a
compressed gas system.

When a gas, particularly air, is compressed and then cooled, humidity in the gas is condensed. This liquid, normally water, must
be expelled from the compressed gas system since it is not wanted
and because it can cause corrosion in different parts of the system.

A common way of taking care of the liquid is to collect it in a container having a float operated valve. When the liquid level rises the
float opens the valve and the liquid is expelled by the gas pressure.
When the liquid level sinks the valve is closed again by the float. In
prior art solutions the valve member is connected to the float by a
lever or a lever system. These solutions do not work satisfactorily
over any longer periods of time because dirt penetrates into the journals for the levers. This means that friction increases so that the proper functioning of the device is jeopardized.

The purpose of the present invention is to provide a drain valve assembly which is capable of proper operation over extended periods of time.
This is obtained with a drain valve assembly as claimed.

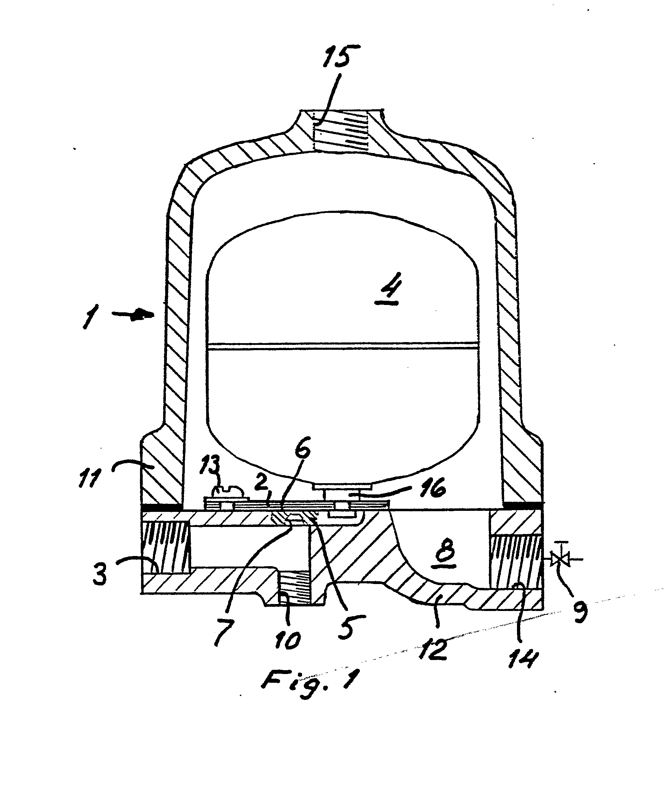

Figs. 1, 2, 3 and 4 of the accompanying drawings show four different
embodiments of the invention.

The embodiment shown in fig 1 comprises a container 1, which can be
a separate container for the drain valve assembly as shown or the
compressed gas storage tank. Container 1 comprises an upper part 11,
provided with an inlet opening 15 for the entry of condensed liquid
from the compressed gas system, and a lower part 12. The lower part
is provided with an outlet channel 3 through which condensed liquid
is expelled as described below. The lower part is further provided
with a portion 8 situated below a valve seat 5 mounted on lower part
12. Portion 8 is intended  for collection of dirt that may be present
in the liquid. Such dirt may be drained through channel 14 and
manual drain valve 9. Valve seat 5 is made of a dirt repellant plastic material, having good corrosion resistance, for example DELRIN (trade mark), and is provided with a flow communication 7 and a flat surface 6. Lower part 12 is further provided with an access port 10, normally plugged, in axial alignment with flow communication 7. A valve member 2 is mounted on lower part 12 by means of a screw 13. Valve member 2 is made of a flexible sheet material being a dirt repellant plastic material, having good corrosion resistance, preferably VITON (trade mark). A float 4 having a stud 16 is fixed to valve member 2. Through access port 10 it is possible to check the operation of the valve and to clean flow communication 7 with a simple tool. This can be done during normal operation of the valve assembly.

During operation of the compressed gas system liquid enters through inlet opening 15 and is collected on the bottom of container 1. When the liquid level has risen to a certain level float 4 starts lifting valve member 2 from valve seat 5.

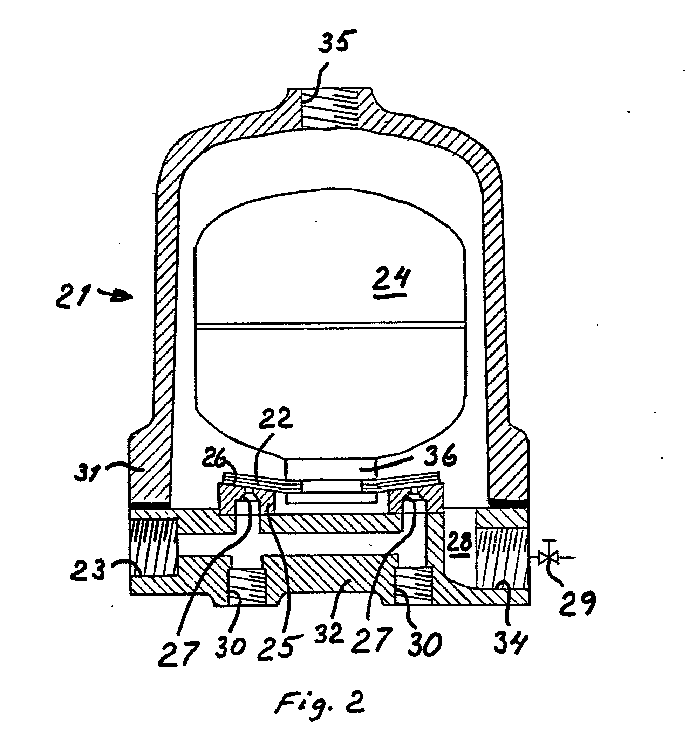

The embodiment shown in fig 2 comprises a container 21 as in the fig 1 embodiment. Container 21 comprises an upper part 31 having an inlet opening 35 and a lower part 32 being provided with an outlet channel 23. The lower part is furthermore provided with flow communications 27 normally covered by a valve member 22. The flow communications are provided in an annular valve seat 25 having a substantially flat surface 26 for cooperation with valve member 22. There is provided an access port 30 in axial alignment with each flow communication 27. A float 24 having a stud 36 is fixed to valve member 22 for actuation thereof. Furthermore, there is a portion 28 situated below valve seat 25 for collection of dirt which can be drained through channel 34 and manual drain valve 29. The materials of valve seat 25 and valve member 22 are preferably the same as in the fig 1 embodiment. The operation of the fig 2 embodiment is similar to that of the fig 1 embodiment. In this embodiment the valve member is not fixed to the container.

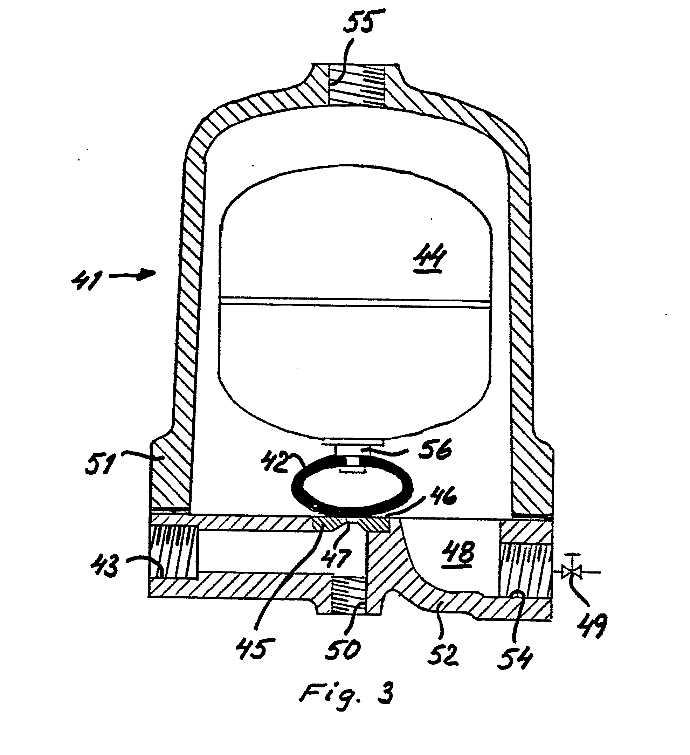

The embodiment shown in fig 3 comprises a container 41 as in the fig 1 embodiment. Container 41 comprises an upper part 51 having an inlet opening 55 and a lower part 52 being provided with an outlet channel 43. The lower part is furthermore provided with a flow communication 47 normally covered by a valve member 42. The flow communication is provided in a valve seat 45 having a flat surface 46 for cooperation with valve member 42. The lower part is provided with an access port 50 in axial alignment with flow communication 47. A float 44 having a stud 56 is fixed to valve member 42, which in this case is made of an elastic tube which is not fixed to the container. As in the fig 2 embodiment proper operation is guaranteed because the float is guided by the container. Furthermore, there is a portion 48 situated below valve seat 45 for collection of dirt which can be drained through channel 54 and manual drain valve 49. The materials of valve seat 45 and valve member 42 are preferably the same as in the fig 1 embodiment. The operation of the fig 3 embodiment is similar to that of the fig 2 embodiment.

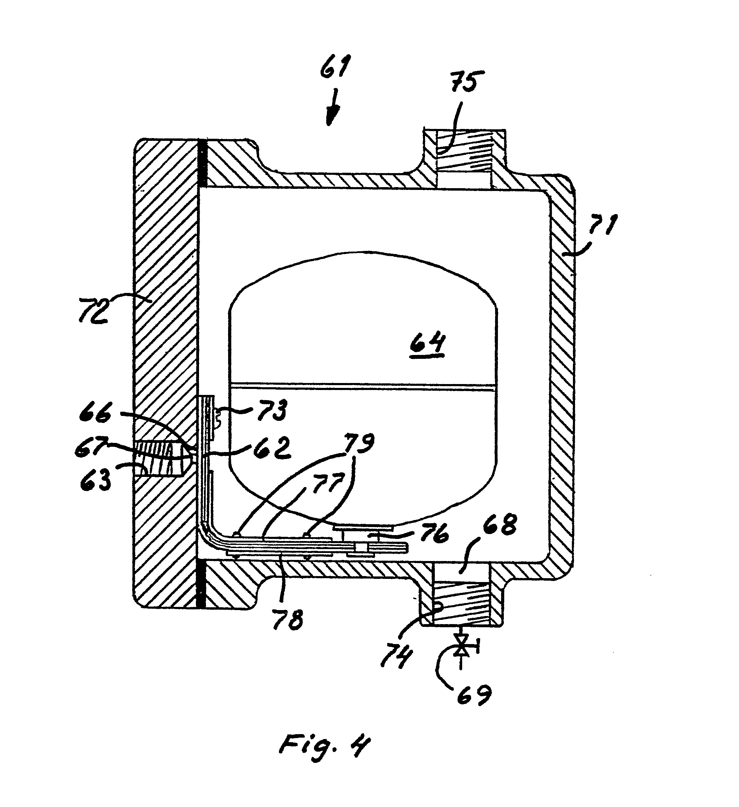

The embodiment shown in fig 4 comprises a container 61 having a mounting plate 72 and a cover 71. Cover 71 is provided with an inlet opening 75, a lower portion 68 for collection of dirt which is drainable through a channel 74 and manual drain valve 69. Mounting plate 72 is provided with a flow communication 67 through which liquid is drained to outlet channel 63. Plate 72 is furthermore provided with a flat surface 66'for cooperation with a valve member 62 being fixed to plate 72 by means of a screw 73. In this case flow communication 67 is situated higher above the bottom of the container than in the other embodiments. This means that the risk for clogging is smaller so that a special material valve seat can be avoided as shown in the drawing. Valve member 62 has an angular form and is stiffened by metal plates 77, 78 which are fixed to valve member 62 by means of rivets 79 or other suitable means. A float 64 provided with a stud 76 is fixed to valve member 62. The material of valve member 62 is preferably the same as in the fig 1 embodiment.

- 4 -                                                 0062014

Claims:

1.    A drain valve assembly for a compressed gas system, said assembly comprising a container (1) pressurized by the compressed gas, a valve member (2) for controlling a flow communication (7) between the container and an outlet channel (3) and a float (4) for actuating said valve member, c h a r a c t e r i z e d  t h e r e - b y  that said valve member (2) is made of a flexible material and fixed to the float (4).

2.    A valve assembly according to claim 1, c h a r a c t e r i z e d t h e r e b y  that the valve member (2) is fixed to the container (1) so that actuation by said float (4) flexes the valve member to selectively open or close said flow communication (7).

3.    A valve assembly according to claim 1 or 2, c h a r a c t e r - i z e d  t h e r e b y  that the valve member (2) is a flexible sheet.

4.    A valve assembly according to claim 1, c h a r a c t e r i z e d t h e r e b y  that the valve member (42) comprises an elastic tube.

5.    A valve assembly according to any of the preceding claims, c h a r a c t e r i z e d  t h e r e b y  that said container (1) comprises a valve seat (5) and a portion (8), situated below the valve seat, for collecting dirt which is drainable through a manual drain valve (9).

6.    A valve assembly according to any of the preceding claims, c h a r a c t e r i z e d  t h e r e b y  that the container (1) is provided with an access port (10) in axial alignment with said flow communication (7).

7.    A valve assembly according to any of the preceding claims, c h a r a c t e r i z e d  t h e r e b y  that said valve member (2) and said valve seat (5) are made of dirt repellant plastic material.

1/4

Fig. 1

2/4

Fig. 2

Fig. 3

Fig. 4

# EUROPEAN SEARCH REPORT

Application number

EP 82 85 0029

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 136 633 (LIQUID CONTROLS) *Page 3, line 14 to page 7, line 27; figures* & US - A - 3 741 234 | 1,2,3 | F 16 T 1/22 |
| X | US-A-2 957 490 (RICHARDS) *Column 4, lines 56-75; column 5; column 6, lines 1-57; figures* | 1,2,3 | |
| A | US-A-2 043 074 (SIMPSON) *Page 2, left-hand column, lines 73-75, right-hand column, lines 1-3; page 3, left-hand column, lines 17-42; figures* | 5,6 | |
| A | US-A-3 437 104 (RICHARDS) *Column 5, lines 36-44; figures* | 7 | |

TECHNICAL FIELDS SEARCHED (Int. Cl. 3)

F 16 T
F 16 K

The present search report has been drawn up for all claims

| Place of search THE HAGUE | Date of completion of the search 29-06-1982 | Examiner VAN GHEEL J.M.U. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82